# EUROPÄISCHE PATENTSCHRIFT

(11) **EP 0 717 084 B1**
(45) Veröffentlichungstag und Bekanntmachung des Hinweises auf die Patenterteilung: **22.11.2000**
(21) Anmeldenummer: 95119363.0
(22) Anmeldetag: 08.12.1995
(51) Int. Cl.: C09B 62/505, D06P 1/38

(54) **Wasserlösliche, faserreaktive Anthrachinonverbindungen**
Water soluble fibre reactive anthraquinone compounds
Composés anthraquinoniques réactifs solubles dans l'eau

(30) Priorität: 15.12.1994 DE 4444692
(43) Veröffentlichungstag der Anmeldung: 19.06.1996
(73) Patentinhaber: DyStar Textilfarben GmbH & Co. Deutschland KG, 60318 Frankfurt am Main (DE)
(72) Erfinder: Russ, Werner Hubert, Dr., E-65439 Flörsheim (DE); Schumacher, Christian, Dr., E-65779 Kelkheim (DE)

(56) Entgegenhaltungen:
- DE-B- 1 103 886
- DE-B- 2 200 107
- GB-A- 929 588

## Beschreibung

Die vorliegende Erfindung liegt auf dem technischen Gebiet der anthrachinoiden faserreaktiven Farbstoffe.

Anthrachinonfarbstoffe sind in der Literatur zahlreich beschrieben, beispielsweise in DE-C-11 03 886. Sie zeichnen sich durch ihre Brillanz, gute Lichtechtheiten und die Stabilität des Chromophors unter sowohl sauren als auch alkalischen Bedingungen aus. Jedoch haben sie den Nachteil der hohen Rohmaterial-Kosten und vergleichsweise niedriger Molextinktion. Aus diesem Grunde ist es beim Färben und Bedrucken von Substraten wichtig, daß die Farbstoffe sowohl überlegene Echtheiten, verbesserte Prozeß-Charakteristiken als auch kompetitive Kosten aufweisen.

Fast alle wichtigen anthrachinoiden Reaktivfarbstoffe sind Abkömmlinge der Bromaminsäure. Diese wird meist mit einer faserreaktiven Aminkomponente umgesetzt, wobei die faserreaktive Gruppe mit der Aminogruppe über aliphatische oder häufiger über aromatische Brückenglieder verknüpft sein kann (A.H.M. Renfrew, Rev. Prog. Color. Relat. Top. 15 (1985) 15).
Einer der wichtigsten bekannten Reaktivfarbstoffe zur Herstellung von brillanten, echten blauen Reaktivfärbungen auf Textilien ist C.I. Reaktive Blue 19 der Formel (A) und wird erstmals in DE-A-965 902 erwähnt. Der Syntheseverlauf ist zahlreich in der Literatur beschrieben.

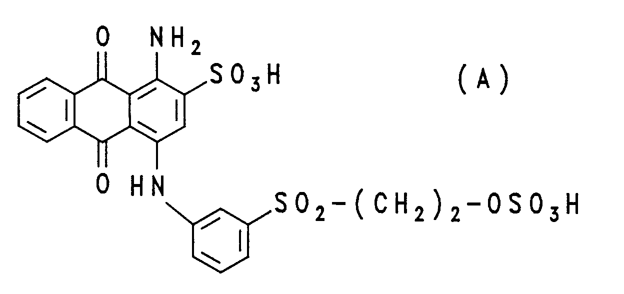

Die bekannten Anthrachinonfarbstoffe haben meist den Nachteil einer aufwendigen Synthese, wobei die Produkt- und Raum-Zeit-Ausbeute unbefriedigend sind.

Die Aufgabe der vorliegenden Erfindung war es, neue brillante, blaue Anthrachinonfarbstoffe mit hohen Echtheiten und Fixierausbeuten zur Verfügung zu stellen, die die genannten Nachteile des Standes der Technik überwinden.

Es wurde gefunden, daß die nachstehend definierten Verbindungen der Formel (1) überraschenderweise den gestellten Anforderungen gerecht werden.

Gegenstand der vorliegenden Erfindung sind Anthrachinonverbindungen der Formel (1), 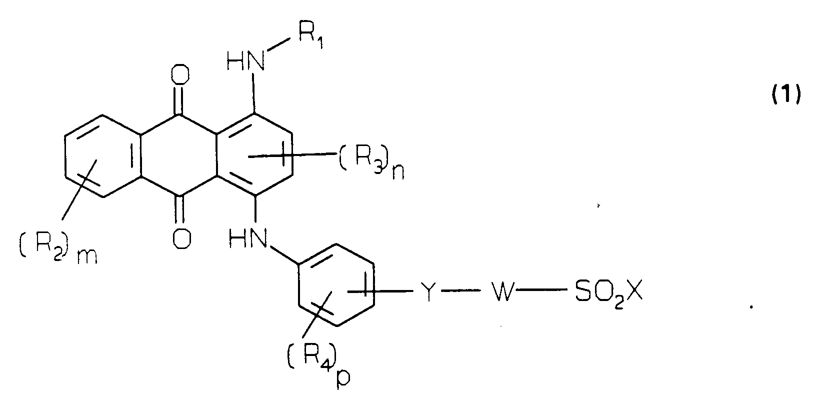 worin
- R¹: Wasserstoff, C₁-C₆-Alkyl-carbonyl, C₆-Arylcarbonyl, C₁-C₄-Alkylphenylcarbonyl, C₁-C₆-Alkyl, C₃-C₆-Cycloalkyl oder Phenyl, wobei C₁-C₆-Alkyl, C₃-C₆-Cycloalkyl und Phenyl durch einen oder mehrere Reste aus der Gruppe Hydroxy, Sulfo, Carboxy, C₁-C₄-Alkyl, C₁-C₄-Alkoxy, Halogen, Cyano, Amino und Nitro substituiert sein können;
- R²: Sulfo oder Carboxy;
- m: eine Zahl von 0 bis 2;
- R³: Sulfo, Carboxy oder Halogen, wie Chlor oder Brom;
- n: die Zahl 0 oder 1;
- R⁴: Sulfo, Carboxy, C₁-C₄-Alkyl oder C₁-C₄-Alkoxy;
- p: eine Zahl von 0 bis 2;
- W: eine C₁-C₆-Alkylengruppe;
- X: Vinyl oder -CH₂CH₂-L, worin L eine unter alkalischen Bedingungen abspaltbare Gruppe ist; und
- Y: ein Brückenglied der Formel -O- oder -NH-
bedeuten, mit der Maßgabe, daß W eine C₃-C₆-Alkylengruppe ist, wenn X für Vinyl und gleichzeitig Y für -NH- stehen.

Bevorzugt im Sinne der vorliegenden Erfindung sind Verbindungen der Formel (1), worin
- R¹: Wasserstoff, C₁-C₄-Alkyl, C₅-C₆-Cycloalkyl, Acetyl, Benzoyl, Phenyl oder Methylphenyl-carbonyl bedeutet, oder C₁-C₄-Alkyl, C₅-C₆-Cycloalkyl oder Phenyl, welche durch 1 bis 3 Reste aus der Gruppe Hydroxy, Sulfo, Carboxy, Methyl, Ethyl, Methoxy, Ethoxy, Fluor, Chlor, Brom, Cyano oder Nitro substituiert sind, bedeutet.

Bevorzugt sind weiterhin Verbindungen der Formel (1), worin
- R³: eine zur NH-R¹-Gruppe ortho-ständige Sulfogruppe ist.

Bevorzugt sind weiterhin Verbindungen der Formel (1), worin
- R⁴: Sulfo, Carboxy, Methyl, Ethyl, Methoxy oder Ethoxy ist.

Bevorzugt sind weiterhin Verbindungen der Formel (1), worin
- W: C₂-C₃-Alkylen, vorzugsweise 1,2-Ethylen oder 1,3-Propylen, ist.

Bevorzugt sind weiterhin Verbindungen der Formel (1), worin
- L: Chlor, Brom, -OSO₃M, -SSO₃M, -OPO₃M₂, vorzugsweise -OSO₃M oder Chlor, ist, wobei M Wasserstoff oder Alkalimetall bedeutet.

Bevorzugt sind weiterhin Verbindungen der Formel (1), worin
- m: die Zahl 0;
- n: die Zahl 1 und
- p: die Zahl 0 oder 1 sind.

Bevorzugt sind weiterhin Verbindungen der Formel (1), worin der Rest -Y-W-SO₂X in meta- oder para-Stellung, besonders bevorzugt in para-Stellung, zur NH-Gruppe des Phenylringes steht.

Besonders bevorzugte Farbstoffe sind Verbindungen der Formel (1a) und (1b). 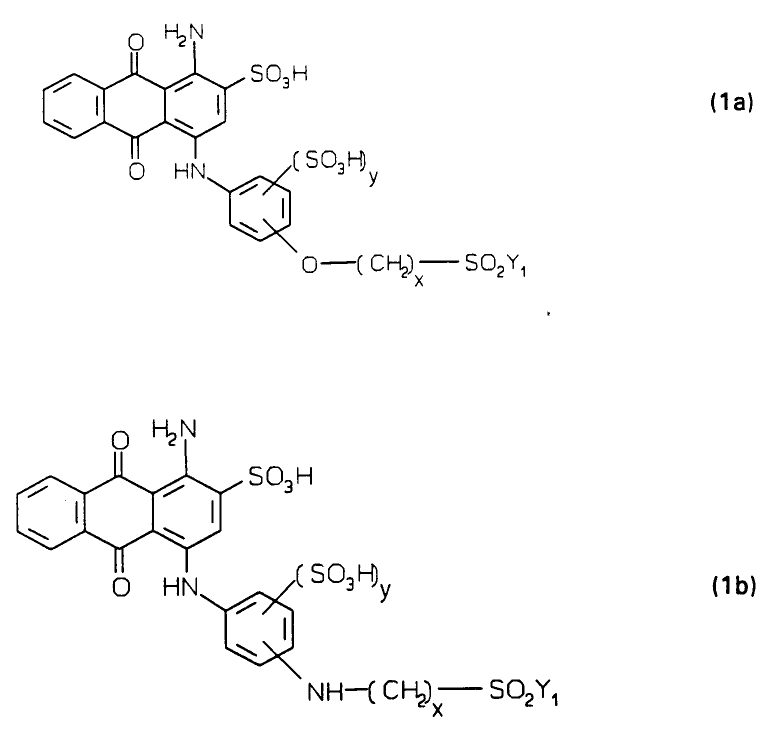 worin
- x: für die Zahl 2 oder 3;
- y: für 0, 1 oder 2, insbesondere für 0 oder 1; und
- Y¹: für β-Sulfatoethyl, β-Chlorethyl oder Vinyl, insbesondere für β-Sulfatoethyl, stehen, mit der Maßgabe für die Verbindung der Formel (1b), daß für den Fall, daß Y¹ Vinyl bedeutet, x die Zahl 3 ist.

Verbindungen der Formel (1), worin W eine Methylengruppe oder eine 1,2-Ethylengruppe, Y die Gruppe -NH- und X gleichzeitig Vinyl bedeuten, sind nicht Gegenstand der vorliegenden Erfindung, da die Vinylgruppe bei dieser Konstitution der -Y-W-SO₂X-Kette sehr leicht intramolekular mit der -NH-Gruppe unter Bildung eines 5- oder 6-Ringheterocyclus reagiert und dann nicht mehr faserreaktiv ist.

Die vorliegende Erfindung betrifft weiterhin ein Verfahren zur Herstellung der erfindungsgemäßen Anthrachinonfarbstoffe (1), das dadurch gekennzeichnet ist, daß man eine Verbindung der Formel (2) 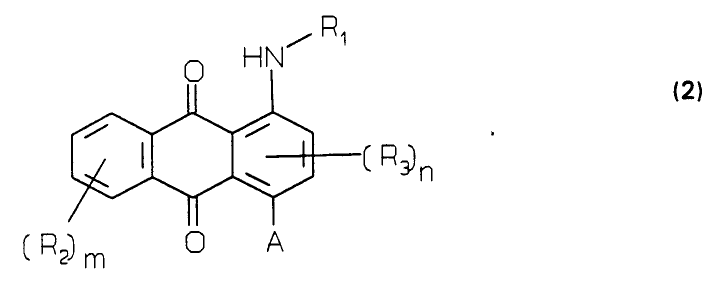 worin A für Fluor, Chlor, Brom, Iod, Sulfo oder Nitro, insbesondere bevorzugt aber für Brom, steht, und die Reste R¹, R² und R³ eine der vorstehend genannten Bedeutungen haben,
mit einer Verbindung der Formel (3), 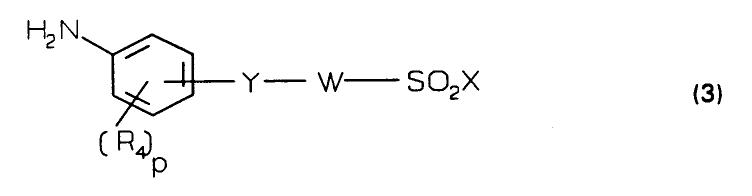 wobei R⁴, Y, W und p eine der obengenannten Bedeutungen haben und X eine der obengenannten Bedeutungen besitzt in Gegenwart einer Kupferverbindung umsetzt.

Bevorzugt wird dabei eine katalytische Menge, insbesondere 1 bis 5 Gew.-%, bezogen auf die Verbindung der Formel (2), einer Kupfer(I)-Verbindung, bevorzugt eines Cu(I)-Halogenids oder Cu(I)-Pseudohalogenids, wie CuCl, CuBr, CuI oder CuCN, verwendet und die Kondensation bei Temperaturen von 50 bis 90°C, bevorzugt 60 bis 85°C, und pH-Werten von 6 bis 10, bevorzugt 7 bis 9, durchgeführt. Die Umsetzung erfolgt in wäßrigem oder wäßrig-organischem Medium in Suspension oder in Lösung. Führt man die Reaktion in wäßrig-organischem Medium durch, so ist das organische Medium beispielsweise Aceton, Dimethylformamid, Dimethylsulfoxid oder N-Methylpyrrolidon. Vorteilhaft wird die bei der Kondensation freiwerdende Halogenwasserstoffsäure fortlaufend durch Zugabe wäßriger Alkalihydroxide, -carbonate, -phosphate, -silicate oder -bicarbonate neutralisiert. Die molaren Mengenverhältnisse der Verbindungen der Formel (2) und (3) betragen zweckmäßig 1:1 bis 1:1,4.

Die vorliegende Erfindung betrifft weiterhin ein Verfahren zur Herstellung einer Anthrachinonverbindung der Formel (1) dadurch gekennzeichnet, daß man eine Verbindung der Formel (2) 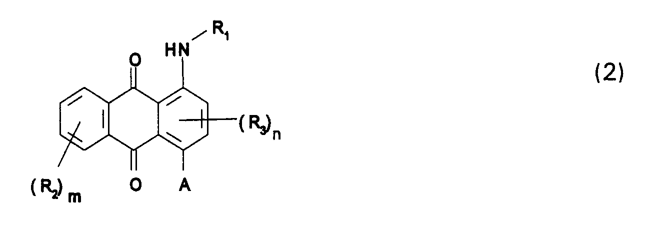 worin A für Fluor, Chlor, Brom, Jod, Sulfo oder Nitro steht und die Reste R¹, R², R³ und n und m die in Formel (1) genannten Bedeutungen haben, mit einer Verbindung der Formel (3a) 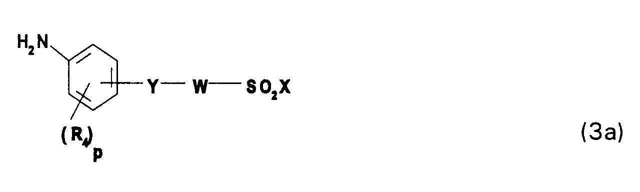 wobei R⁴, Y, W und p die in Formel (1) genannten Bedeutungen haben und X β-Hydroxyethyl bedeutet, in Gegenwart einer Kupferverbindung zu einer Verbindung der Formel (4) 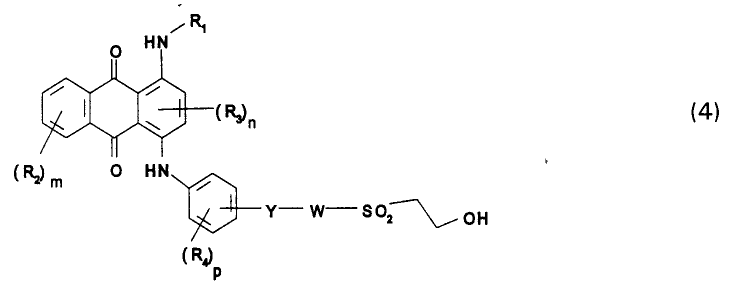 umsetzt und in einem nachfolgenden Reaktionsschritt in eine Anthrachinonverbindung der Formel (1) überführt.

Bevorzugte Verfahrensvariante ist diejenige, in welcher von einer Verbindungen der Formel (3a) ausgegangen wird, wobei in einem weiteren Verfahrensschritt die β-Hydroxyethylgruppe zur gewünschten faserreaktiven Gruppe, z.B. β-Sulfatoethylgruppe, verestert wird.

Verbindungen der Formel (4) sind neu und ebenfalls Gegenstand der vorliegenden Erfindung.

Für den Fall, daß R⁴ für Sulfo und p für 1 oder 2 steht, ist weiterhin diejenige Variante bevorzugt, in der man eine entsprechende sulfogruppenfreie Verbindung der Formel (3a) (X = CH₂CH₂OH, p = 0) für die Kondensationreaktion einsetzt und anschließend gleichzeitig mit der Veresterung der β-Hydroxyethylgruppe zur β-Sulfatoethylgruppe den Phenylrest sulfiert.

Die Anthrachinonverbindung der Formel (4) wird durch die Einwirkung von Schwefelsäure, enthaltend bis zu 60 Gew.-%, bevorzugt bis zu 25 Gew.%, an Schwefeltrioxid, oder durch Halogensulfonsäure, wie Chlorsulfonsäure, oder durch Phosphorsäure verestert.

Für den Fall, daß X in Formel (1) die Bedeutung -SSO₃M hat, geht man von einer Verbindung der Formel (3) aus, worin X Vinyl bedeutet, und setzt mit Natriumthiosulfat unter Addition um.

Durch Anwendung von Schwefelsäure, enthaltend bis zu 10 Gew.-% SO₃, und bei Temperaturen von 0 bis 40°C, bevorzugt 10 bis 30°C, wird nur die β-Hydroxyethylgruppe zur β-Sulfatoethylgruppe verestert. Durch Anwendung von Schwefelsäure, enthaltend 15 bis 60 Gew.-% SO₃, und Temperaturen von 20 bis 100°C, bevorzugt 40 bis 80°C, wird in einem Schritt verestert und der Phenylring mindestens einmal sulfiert.

Die Verbindungen der Formel (1) werden z.B. durch Ausrühren auf Eis/Wasser abgeschieden. Durch Neutralisieren mit Alkalihydroxid, -phosphat, -silicat, -carbonat oder -bicarbonat erhält man die wäßrigen Lösungen der Alkalisalze der Verbindungen der Formel (1). Die Isolierung der Farbstoffe aus dieser Lösung kann z.B. durch Aussalzen oder durch Sprühtrocknung erfolgen. Besonders vorteilhaft ist die direkte Verwendung der standardisierten wäßrigen Formulierungen, denen gegebenenfalls Puffersubstanzen zugesetzt werden und die gegebenenfalls aufkonzentriert werden können, für die entsprechenden anwendungstechnischen Zwecke.

Verbindungen der Formel (2) sind beispielsweise:
1-Amino-4-brom-, 1-Amino-4-brom-2-sulfo-, 1-Amino-2,4-dibrom-, 1-Methylamino-2-carboxy-4-brom-, 1-Ethylamino-2-carboxy-4-brom-, 1-Isopropylamino-2-carboxy-4-brom-, 1-Amino-4-brom-2,6-disulfo-, 1-Amino-4-brom-2,7-disulfo-, 1-Amino-4-brom-2,5,8-trisulfo-, 1-Propylamino-4-brom-2-sulfo-, 1-Amino-4-brom-2-carboxy-, 1-Amino-4-brom-2-sulfo-6-carboxy-, 1-Amino-4-brom-2-sulfo-7-carboxy-, 1-Methylamino-4-brom-, 1-Methylamino-4-brom-2-sulfo-, 1-Ethylamino-4-brom-2-sulfo-, 1-(β-Hydroxyethyl)amino-4-bromo-2-sulfo-, 1-Phenylamino-4-brom-2-sulfo-, 1-Amino-2-brom-4-nitro-, 1-Cyclohexylamino-4-brom-, 1-Benzoylamino-4-brom-, 1-Acetylamino-4-brom-, 1-Cyclohexylamino-4-brom-5-sulfo-, 1-Cyclohexylamino-4-brom-6-sulfo-, 1-Cyclohexylamino-4-brom-7-sulfo- oder 1-Cyclohexylamino-4-brom-8-sulfo-Anthrachinon.
Besonders bevorzugt ist als Anthrachinon-Komponente 1-Amino-4-brom-2-sulfo-anthrachinon. Die genannten Anthrachinonverbindungen sind dem Fachmann bekannt und beispielsweise in Houben-Weyl, Bd. 7/3c, 4. Auflage, S. 46 ff. beschrieben.

Verbindungen der Formel (3) sind Amino-phenolether (Y = Sauerstoff) oder Diaminobenzole (Y = NH). Für den Fall, daß Y für Sauerstoff steht, sind die Verbindungen der Formel (3) aus der EP-A-0 355 492 bekannt. Für den Fall, daß Y für NH steht, sind die Verbindungen der Formel (3) aus der EP-A-0 629 667 bekannt.
Amino-Verbindungen der Formel (3a) sind beispielsweise:
4-[3-(β-Hydroxyethylsulfonyl)]-propoxy-anilin, 4-[3-(β-Hydroxyethylsulfonyl)]-propoxy-anilin-3-sulfonsäure, 4-[3-(β-Hydroxyethylsulfonyl)]-propoxy-anilin-2-sulfonsäure, 3-[3-(β-Hydroxyethylsulfonyl)]-propoxy-anilin, 3-[3-(β-Hydroxyethylsulfonyl)]-propoxy-anilin-4-sulfonsäure, 5-[3-(β-Hydroxyethylsulfonyl)]-propoxy-anilin-2-sulfonsäure, 4-[2-(β-Hydroxyethylsulfonyl)]-ethoxy-anilin, 4-[2-(β-Hydroxyethyl-sulfonyl)]-ethoxy-anilin-3-sulfonsäure, 4-[2-(β-Hydroxyethylsulfonyl)]-ethoxy-anilin-2-sulfonsäure, 3-[2-(β-Hydroxyethylsulfonyl)]-ethoxy-anilin, 3-[2-(β-Hydroxyethylsulfonyl)]-ethoxyanilin-4-sulfonsäure, 5-[2-(β-Hydroxyethylsulfonyl)]-ethoxy-anilin-2-sulfonsäure, N-[4'-Aminophenyl]-3-(β-hydroxyethylsulfonyl)-propylamin, N-[4'-Amino-3'-sulfo-phenyl]-3-(β-hydroxyethylsulfonyl)-propylamin, N-[4'-Amino-3'-carboxyphenyl]-3-(β-hydroxyethylsulfonyl)-propylamin, N-[4'-Aminophenyl]-2-(β-hydroxyethylsulfonyl)-ethylamin, N-[4'-Amino-3'-sulfo-phenyl]-2-(β-hydroxyethylsulfonyl)-ethylamin, N-[4'-Amino-3'-carboxy-phenyl]-2-(β-hydroxyethylsulfonyl)-ethylamin, N-[3'-Aminophenyl]-3-(β-hydroxyethylsulfonyl)-propylamin, N-[3'-Amino-4-sulfo-phenyl]-3-(β-hydroxyethylsulfonyl)-propylamin, N-[3'-Amino-4-carboxy-phenyl]-3-(β-hydroxyethylsulfonyl)-propylamin, N-[3'-Aminophenyl]-2-(β-hydroxyethylsulfonyl)-ethylamin, N-[3'-Amino-4'-sulfo-phenyl]-2-(β-hydroxyethylsulfonyl)-ethylamin, N-[3'-Amino-4'-carboxy-phenyl]-2-(β-hydroxyethylsulfonyl)-ethylamin. Amino-Verbindungen der Formel (3) sind beispielsweise 4-[3-(β-Sulfatoethylsulfonyl)]-propoxy-anilin, 4-[3-(β-Sulfatoethylsulfonyl)]-propoxy-anilin-3-sulfonsäure, 4-[3-(β-Sulfatoethylsulfonyl)]-propoxy-anilin-2-sulfonsäure, 3-[3-(β-Sulfatoethylsulfonyl)]-propoxy-anilin, 3-[3-(β-Sulfatoethylsulfonyl)]-propoxy-anilin-4-sulfonsäure, 5-[3-(β-Sulfatoethylsulfonyl)]-propoxy-anilin-2-sulfonsäure, 4-[2-(β-Sulfatoethylsulfonyl)]-ethoxy-anilin, 4-[2-(β-Sulfatoethylsulfonyl)]-ethoxy-anilin-3-sulfonsäure, 4-[2-(β-Sulfatoethylsulfonyl)]-ethoxy-anilin-2-sulfonsäure, 3-[2-(β-Sulfatoethylsulfonyl)]-ethoxy-anilin, 3-[2-(β-Sulfatoethylsulfonyl)]-ethoxy-anilin-4-sulfonsäure, 5-[2-(β-Sulfatoethylsulfonyl)]-ethoxy-anilin-2-sulfonsäure, N-[4'-Aminophenyl]-3-(β-sulfatoethylsulfonyl)-propylamin, N-[4'-Amino-3'-sulfo-phenyl]-3-(β-sulfatoethylsulfonyl)-propylamin, N-[4'-Amino-3'-carboxy-phenyl]-3-(β-sulfatoethylsulfonyl)-propylamin, N-[4'-Aminophenyl]-2-(β-sulfatoethylsulfonyl)-ethylamin, N-[4'-Amino-3'-sulfo-phenyl]-2-(β-sulfatoethylsulfonyl)-ethylamin, N-[4'-Amino-3'-carboxy-phenyl]-2-(β-sulfatoethylsulfonyl)-ethylamin, N-[3'-Aminophenyl]-3-(β-sulfatoethylsulfonyl)-propylamin, N-[3'-Amino-4'-sulfo-phenyl]-3-(β-sulfatoethylsulfonyl)-propylamin, N-[3'-Amino-4'-carboxy-phenyl]-3-(β-sulfatoethylsulfonyl)-propylamin, N-[3'-Aminophenyl]-2-(β-sulfatoethyl-sulfonyl)-ethylamin, N-[3'-Amino-4'-sulfo-phenyl]-2-(β-sulfatoethylsulfonyl)-ethylamin und N-[3'-Amino-4'-carboxy-phenyl]-2-(β-sulfatoethylsulfonyl)-ethylamin.

Die Verbindungen der Formel (1) haben faserreaktive Eigenschaften und besitzen sehr gute Farbstoffeigenschaften. Sie können zum Färben und Bedrucken von hydroxy-, mercapto-, amino- und/oder carbonamidgruppenhaltigen Materialien, insbesondere Fasermaterialien, verwendet werden. Es werden brillante blaue Farbtöne mit hervorragenden Echtheiten, wie Lichtechtheit und Chlorwasserechtheit, erhalten, ohne daß Metallkomplexierungen erforderlich sind. Die erfindungsgemäßen Farbstoffe sind somit ökologisch von Vorteil.

Gegenstand der vorliegenden Erfindung ist deshalb auch die Verwendung der Verbindungen der Formel (1) zum Färben oder Bedrucken der genannten Materialien. Dabei wird die Verbindung der Formel (1) auf das Material aufgebracht oder in das Material eingebracht und auf oder in dem Material mittels Wärme oder mit Hilfe eines alkalisch wirkenden Mittels fixiert.

Beispiele für geeignete Materialien sind native oder regenerierte Cellulosematerialien, wie Baumwolle, Leinen, Viskose, Rayon, chemisch modifizierte Cellulosefasern, proteinische Fasern, wie Wolle oder Seide, und synthetische Polyamide, wie Nylon oder Perlon, die alle dem Fachmann hinreichend bekannt sind.

Geeignete Applikationsverfahren sind z.B. das Ausziehverfahren in Haspelkufen, Jets oder kontinuierliche Färbetechniken. Insbesondere geeignet sind die erfindungsgemäßen Farbstoffe zum Färben und Bedrucken von Cellulosematerialien durch Verwendung einer kurzflottigen Applikationstechnik wie für den Textildruck oder Klotz-Färbeverfahren, wie beispielsweise Kontinue-Verfahren.

Die Farbstoffe der vorliegenden Erfindung sind in dieser Beschreibung in Form ihrer freien Säuren geschrieben. Sie können aber auch als Salze dieser Säuren angewendet werden. Bevorzugt werden sie in ihrer Salzform und besonders bevorzugt in der Alkalimetall- und Erdalkalimetallsalz-Form verwendet wie z.B. als Na-, K- oder Li-Salze.

In den Beispielen bedeuten Prozentangaben Gewichtsprozente und Teile Gewichtsteile. Die angegebenen Absorptionsmaxima (Lambda max) im sichtbaren Bereich wurden anhand ihrer Alkalimetallsalze in wäßriger Lösung ermittelt.

### Beispiel 1

38,2 Teile 1-Amino-4-brom-2-sulfo-anthrachinon (Bromaminsäure) werden in wäßriger Suspension mit 27,2 Teilen 4-[3-(β-Hydroxyethylsulfonyl)]-propoxy-anilin, bekannt aus EP-A-0 355 492, unter Zusatz von 1 Teil Kupfer(I)-chlorid bei einem pH-Wert von 8,5 und einer Temperatur von 70°C während 3 Stunden kondensiert. Hierbei entsteht eine dunkelblaue Lösung. Nach Abkühlen auf 20 bis 25°C wird von unlöslichen Bestandteilen abfiltriert, mit Schwefelsäure bis pH 1 angesäuert, einige Zeit gerührt und der ausgefallene Farbstoff durch Absaugen isoliert. Man erhält 65 Teile eines Farbstoffs der Formel

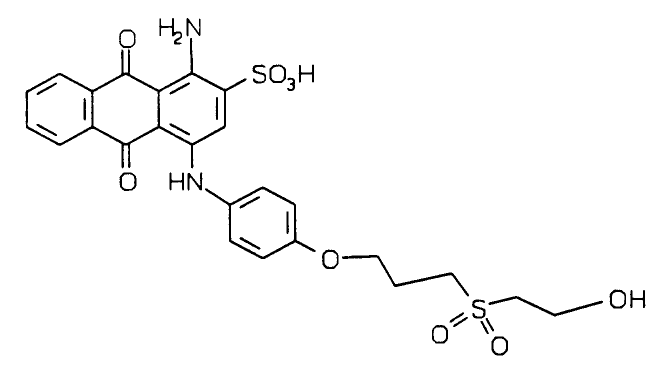

Der Filterkuchen wird getrocknet und in ca. 200 Teile 100 %ige Schwefelsäure eingetragen, so daß die Temperatur nicht über 40°C steigt, einige Zeit gerührt und nochmals mit 10 Teilen 20%igem Oleum versetzt. Es wird noch einige Zeit gerührt, bis die Umsetzung beendet ist und die erhaltene Lösung wird dann in Eiswasser eingerührt, mit Natriumcarbonat bis pH 2 gestellt, anschließend abgenutscht, der feuchte Filterkuchen wieder in Wasser mit Natriumcarbonat bei pH 5 gelöst, wobei man eine tiefblaue Lösung erhält, aus der durch Aussalzen mit NaCl oder bevorzugt durch Eindampfen im Vakuum 63 Teile des Farbstoffs der Formel 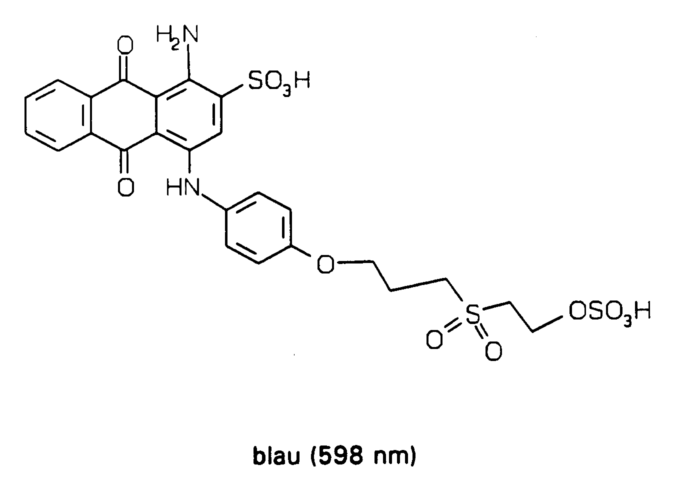 mit einer Reinheit von 93 % per HPLC erhalten werden.
Der Farbstoff färbt und bedruckt Cellulosefasern in brillanten blauen Farbtönen mit hohen Farbstärken bei guter Egalität und sehr guten Echtheitseigenschaften, von denen die Lichtechtheit besonders hervorzuheben ist.

### Beispiel 2

65 Teile der β-Hydroxyethylsulfonyl-Zwischenstufe aus Beispiel 1 wird getrocknet in ca. 250 Teile 20 %iges Oleum eingetragen, so daß die Temperatur nicht über 40°C steigt. Anschließend wird noch eine Weile bei 45-50°C unter Rühren weiter umgesetzt. Die oleumhaltige Masse wird dann bei 0 bis 15 °C auf Eiswasser gerührt, mit Ca-Carbonat auf pH 1,5 gestellt, anschließend mit Na-Carbonat auf pH 5 gestellt und filtriert. Es wird von entstandenem Calciumsulfat abfiltriert und man erhält eine tiefblaue Lösung, woraus man durch Eindampfen im Vakuum 71 Teile des Farbstoffs der Formel 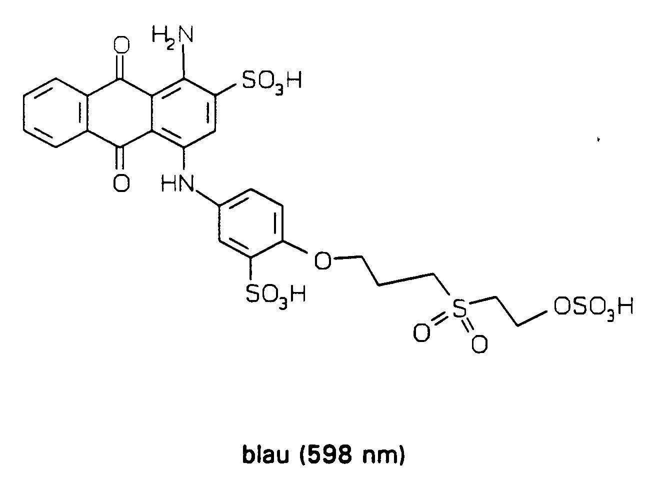 mit einer Reinheit von 89 % per HPLC erhalten werden. Der Farbstoff färbt und bedruckt Cellulosefasern in brillanten blauen Farbtönen mit hohen Farbstärken bei guter Egalität und sehr guten Echtheitseigenschaften, von denen die Lichtechtheit besonders hervorzuheben ist.

### Beispiel 3

38,2 Teile 1-Amino-4-brom-2-sulfo-anthrachinon (Bromaminsäure) werden in wäßriger Suspension mit 27,2 Teilen 4-[3-(β-Hydroxyethylsulfonyl)]-propyl-amino-anilin unter Zusatz von 1,2 Teilen Kupfer(I)-chlorid bei einem pH-Wert von 8 bis 8,5 und einer Temperatur von 65 bis 70°C während 2 bis 3 Stunden kondensiert. Hierbei entsteht eine dunkelblaue Lösung. Nach Abkühlen auf 20 bis 25°C wird von unlöslichen Bestandteilen abfiltriert, mit Schwefelsäure angesäuert und der ausgefallene Farbstoff durch Absaugen isoliert. Der Filterkuchen wird getrocknet, gemahlen und dann in 200 Teile 100 %ige Schwefelsäure eingetragen, so daß die Temperatur nicht über 40°C steigt. Das Reaktionsprodukt wird mit Eiswasser versetzt, anschließend filtriert, wieder in Wasser mit Natriumcarbonat bei pH 5 gelöst, wobei man eine tiefblaue Lösung erhält, aus der durch Aussalzen mit NaCl oder bevorzugt durch Eindampfen im Vakuum 63 Teile des Farbstoffs der Formel 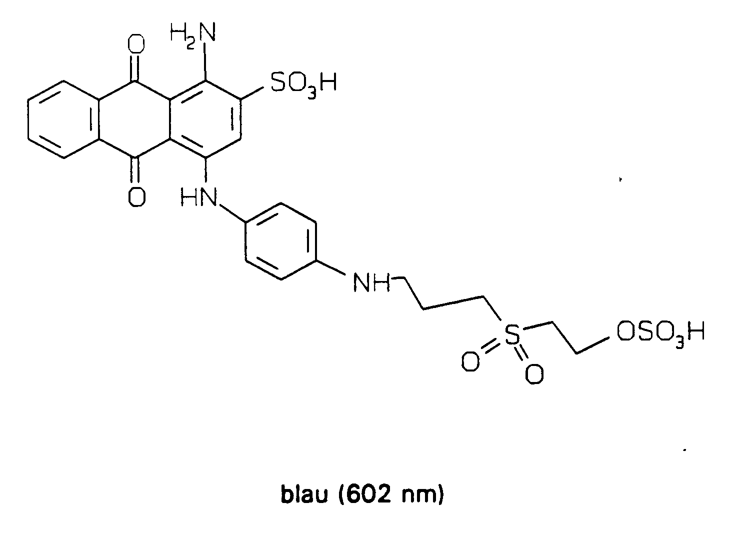 mit einer Reinheit von 88 % per HPLC erhalten werden.
Der Farbstoff färbt und bedruckt Cellulosefasern in brillanten blauen Farbtönen mit hohen Farbstärken bei guter Egalität und sehr guten Echtheitseigenschaften, von denen die Lichtechtheit besonders hervorzuheben ist.

### Beispiel 4

38,2 Teile 1-Amino-4-brom-2-sulfo-anthrachinon (Bromaminsäure) werden in wäßriger Suspension mit 27,2 Teilen 4-[3-(β-Hydroxyethylsulfonyl)]-propyl-amino-anilin unter Zusatz von 1,2 Teilen Kupfer(I)-chlorid bei einem pH-Wert von 8,5 und einer Temperatur von 70°C während 3 Stunden kondensiert. Hierbei entsteht eine dunkelblaue Lösung. Nach Abkühlen auf 20 bis 25°C wird von unlöslichen Bestandteilen abfiltriert, mit Schwefelsäure angesäuert und der ausgefallene Farbstoff durch Absaugen isoliert. Der Filterkuchen wird getrocknet, gemahlen und dann in 200 Teile 20%iges Oleum eingetragen, so daß die Temperatur nicht über 40°C steigt. Es wird anschließend einige Zeit bei 60°C gerührt, bis die Umsetzung beendet ist. Das Reaktionsprodukt wird mit Eiswasser versetzt, anschließend filtriert, wieder in Wasser mit Natriumcarbonat bei pH 5 gelöst, wobei man eine tiefblaue Lösung erhält, aus der durch Aussalzen mit KCl oder bevorzugt durch Eindampfen im Vakuum 70 Teile des Farbstoffs der Formel 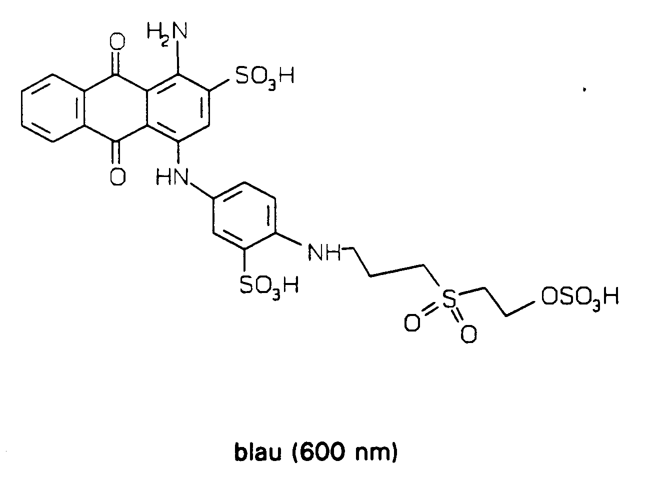 mit einer Reinheit von 91 % per HPLC erhalten werden. Der Farbstoff färbt und bedruckt Cellulosefasern in brillanten blauen Farbtönen mit hohen Farbstärken bei guter Egalität und sehr guten Echtheitseigenschaften, von denen die Lichtechtheit besonders hervorzuheben ist.

### Beispiel 5

38,2 Teile 1-Amino-4-brom-2-sulfo-anthrachinon (Bromaminsäure) werden in wäßriger Suspension mit 41 Teilen 4-[3-(β-Sulfatoethylsulfonyl)]-propyl-amino-anilin unter Zusatz von 2 Teilen Kupfer(I)-chlorid bei einem pH-Wert von 7,8 bis 8,2 und einer Temperatur von 70°C während 4 Stunden kondensiert. Hierbei entsteht eine dunkelblaue Losung. Nach Abkühlen auf 20 bis 25°C wird von unlöslichen Bestandteilen abfiltriert, die erhaltene tiefblaue Lösung durch Zugabe verdünnter Schwefelsäure auf pH 5 gestellt und das Reaktionsprodukt durch Aussalzen mit NaCl oder bevorzugt durch Eindampfen im Vakuum isoliert. Man erhält den Farbstoff der Formel 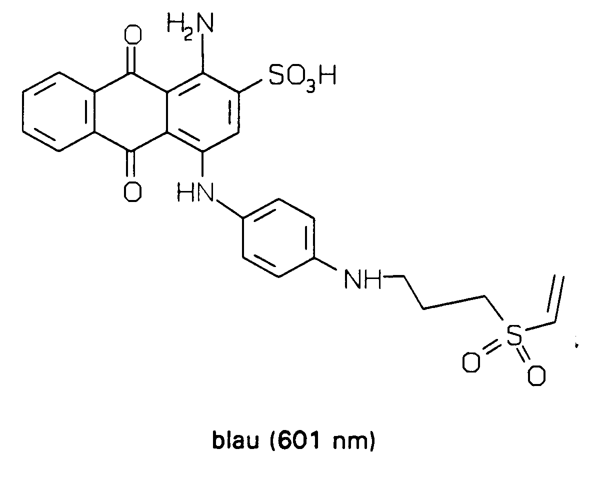 mit einer Reinheit von 74 % per HPLC. Der Farbstoff färbt und bedruckt Cellulosefasern in brillanten blauen Farbtönen mit hohen Farbstärken bei guter Egalität und sehr guten Echtheitseigenschaften, von denen die Lichtechtheit besonders hervorzuheben ist.

Man erhält weitere wertvolle faserreaktive Farbstoffe der nachstehenden Formel, wenn man die in der Tabelle angegebenen Amine der Formel T-NH₂ zur Umsetzung mit 1-Amino-4-brom-2-sulfo-anthrachinon verwendet und die Synthesen analog zu den vorgenannten Beispielen durchführt.

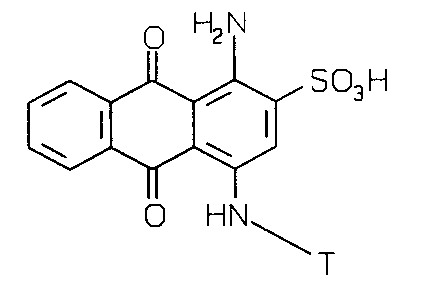

| Bsp.Nr. | Amin T-NH₂ | Farbton auf Baumwolle |
|---|---|---|
| 6 | 4-(2'-β-Sulfatoethylsulfonyl)-ethoxy-anilin | blau (602 nm) |
| 7 | 3-Sulfo-4-(2'-β-sulfatoethylsulfonyl)-ethoxy-anilin | blau (599 nm) |
| 8 | 2-Sulfo-4-(2'-β-sulfatoethylsulfonyl)-ethoxy-anilin | blau (612 nm) |
| 9 | 2-Sulfo-4-(3'-β-sulfatoethylsulfonyl-propyl)-amino-anilin | blau (600 nm) |
| 10 | 4-Sulfo-3-(3'-β-sulfatoethylsulfonyl-propyl)-amino-anilin | blau (600 nm) |
| 11 | 2-Sulfo-5-(3'-sulfatoethylsulfonyl-propyl)-amino-anilin | blau (602 nm) |

## Patentansprüche

1. Anthrachinonverbindung der Formel (1) 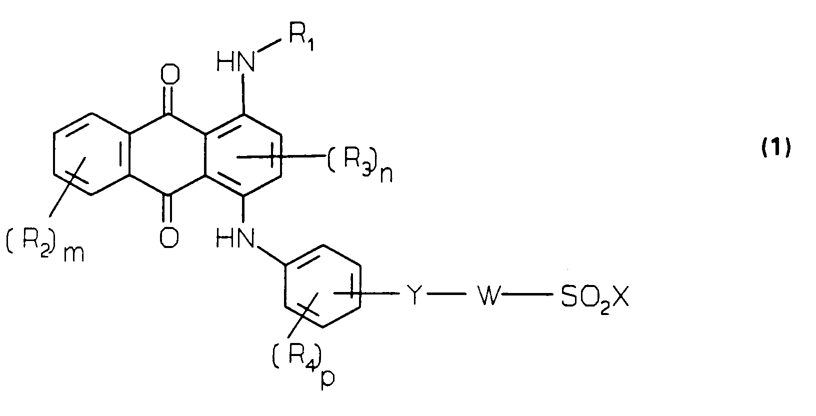 worin
R¹ Wasserstoff, C₁-C₆-Alkyl-carbonyl, C₆-Arylcarbonyl, C₁-C₄-Alkylphenylcarbonyl, C₁-C₆-Alkyl, C₃-C₆-Cycloalkyl oder Phenyl, wobei C₁-C₆-Alkyl, C₃-C₆-Cycloalkyl und Phenyl durch einen oder mehrere Reste aus der Gruppe Hydroxy, Sulfo, Carboxy, C₁-C₄-Alkyl, C₁-C₄-Alkoxy, Halogen, Cyano, Amino und Nitro substituiert sein können;
R² Sulfo oder Carboxy;
m eine Zahl von 0 bis 2;
R³ Sulfo, Carboxy oder Halogen;
n die Zahl 0 oder 1;
R⁴ Sulfo, Carboxy, C₁-C₄-Alkyl oder C₁-C₄-Alkoxy;
p eine Zahl von 0 bis 2;
W eine C₁-C₆-Alkylengruppe;
X Vinyl oder -CH₂CH₂-L, worin L eine unter alkalischen Bedingungen abspaltbare Gruppe ist; und
Y ein Brückenglied der Formel -O- oder -NH-
bedeuten, mit der Maßgabe, daß W eine C₃-C₆-Alkylengruppe ist, wenn X für Vinyl und gleichzeitig Y für -NH- stehen.

2. Anthrachinonverbindung nach Anspruch 1, dadurch gekennzeichnet, daß
R¹ Wasserstoff, C₁-C₄-Alkyl, C₅-C₆-Cycloalkyl, Acetyl, Benzoyl, Phenyl oder Methylphenyl-carbonyl bedeutet, oder C₁-C₄-Alkyl, C₅-C₆-Cycloalkyl und Phenyl, welche durch 1 bis 3 Reste aus der Gruppe Hydroxy, Sulfo, Carboxy, Methyl, Ethyl, Methoxy, Ethoxy, Fluor, Chlor, Brom, Cyano oder Nitro substituiert sind, bedeutet.

3. Anthrachinonverbindung nach Anspruch 1 oder 2, dadurch gekennzeichnet, daß R³ Chlor, Brom oder eine zur NH-R¹-Gruppe ortho-ständige Sulfogruppe ist.

4. Anthrachinonverbindung nach mindestens einem der Ansprüche 1 bis 3, dadurch gekennzeichnet, daß W C₂-C₃-Alkylen, vorzugsweise 1,2-Ethylen oder 1,3-Propylen, ist.

5. Anthrachinonverbindung nach mindestens einem der Ansprüche 1 bis 4, dadurch gekennzeichnet, daß L Chlor, Brom, -OSO₃M, -SSO₃M oder -OPO₃M₂ ist, wobei M Wasserstoff oder Alkalimetall bedeutet.

6. Anthrachinonverbindung nach mindestens einem der Ansprüche 1 bis 5, dadurch gekennzeichnet, daß
m die Zahl 0;
n die Zahl 1 und
p die Zahl 0 oder 1 ist.

7. Anthrachinonverbindung nach mindestens einem der Ansprüche 1 bis 6, dadurch gekennzeichnet, daß der Rest -Y-W-SO₂X in meta- oder para-Stellung zur NH-Gruppe des Phenylringes steht.

8. Anthrachinonverbindung nach Anspruch 1, gekennzeichnet durch die Formel (1a) oder (1b) 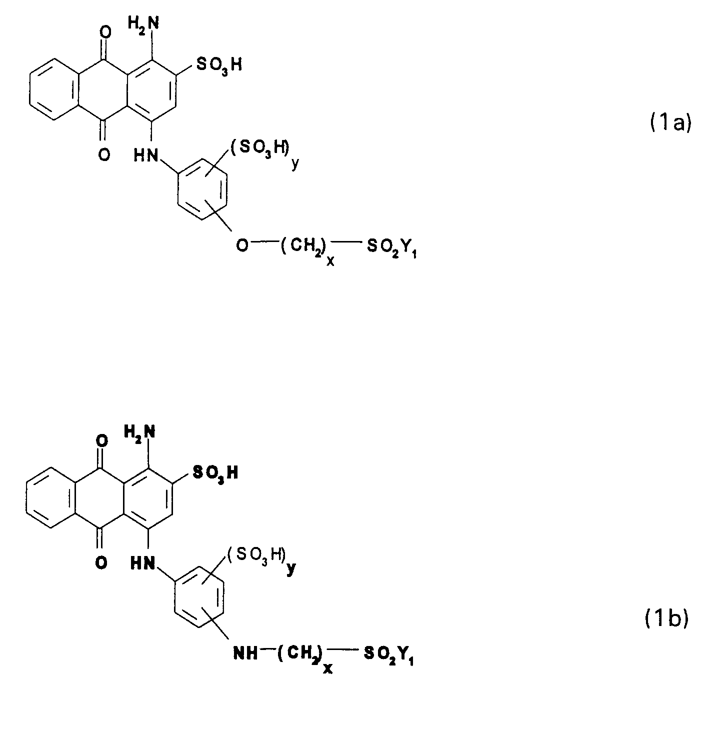 worin
x für die Zahl 2 oder 3;
y für 0, 1 oder 2, insbesondere für 0 oder 1; und
Y¹ für β-Sulfatoethyl, β-Chlorethyl oder Vinyl stehen, mit der Maßgabe für die Verbindung der Formel (1b), daß für den Fall, daß Y¹ Vinyl bedeutet, x die Zahl 3 ist.

9. Verfahren zur Herstellung einer Anthrachinonverbindung der Formel (1) nach mindestens einem der Ansprüche 1 bis 8, dadurch gekennzeichnet, daß man eine Verbindung der Formel (2) 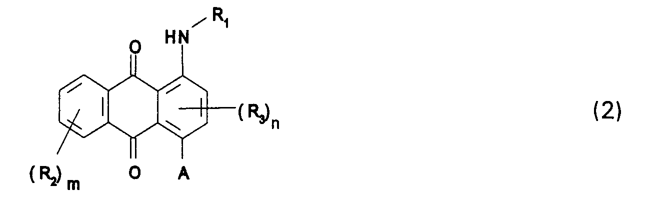 worin A für Fluor, Chlor, Brom, Iod, Sulfo oder Nitro, insbesondere bevorzugt aber für Brom, steht, und die Reste R¹, R² und R³ sowie m und n eine der vorstehend genannten Bedeutungen haben, mit einer Verbindung der Formel (3), 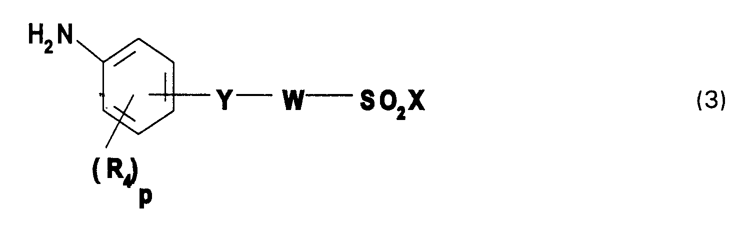 wobei R⁴ Y, W und p eine der vorstehend genannten Bedeutungen haben und X eine der vorstehend genannten Bedeutungen besitzt in Gegenwart einer Kupferverbindung umsetzt.

10. Verfahren zur Herstellung einer Anthrachinonverbindung der Formel (1) nach mindestens einem der Ansprüche 1 bis 8, dadurch gekennzeichnet, daß man eine Verbindung der Formel (2) 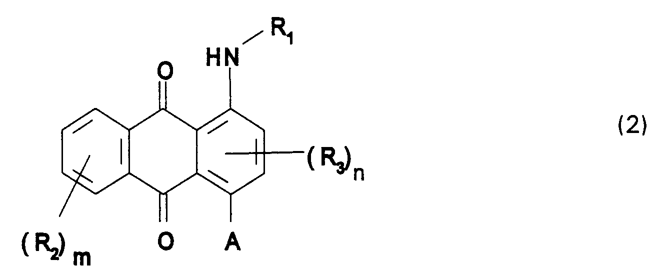 worin A für Fluor, Chlor, Brom, Jod, Sulfo oder Nitro steht und die Reste R¹, R², R³ und n und m die in Formel (1) genannten Bedeutungen haben, mit einer Verbindung der Formel (3a) 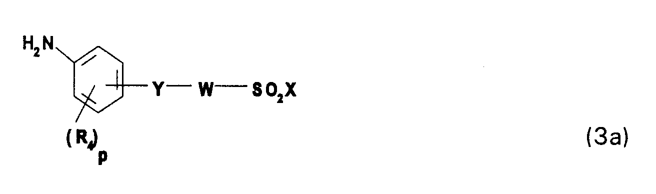 wobei R⁴, Y, W und p die in Formel (1) genannten Bedeutungen haben und X β-Hydroxyethyl bedeutet, in Gegenwart einer Kupferverbindung zu einer Verbindung der Formel (4) 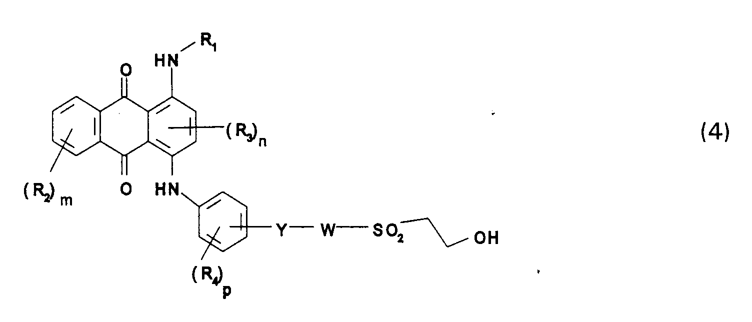 umsetzt und in einem nachfolgenden Reaktionsschritt in eine Anthrachinonverbindung der Formel (1) überführt.

11. Verfahren nach Anspruch 9 oder 10, dadurch gekennzeichnet, daß die Kupferverbindung eine Cu(I)-Verbindung, vorzugsweise CuCl, CuBr, CuJ oder CuCN, ist.

12. Verfahren nach Anspruch 10 oder 11 zur Herstellung einer Anthrachinonverbindung der Formel (1), worin p die Zahl 1 und L -OSO₃M bedeutet, dadurch gekennzeichnet, daß man eine Verbindung der Formel (3a) einsetzt, die frei von Sulfogruppen ist, und mit Schwefelsäure, enthaltend 15 bis 60 Gew.-% SO₃, bei Temperaturen von 20 bis 100°C, bevorzugt bei 40 bis 80°C, verestert und gleichzeitig sulfiert.

13. Verwendung einer Anthrachinonverbindung der Formel (1) gemäß mindestens einem der Ansprüche 1 bis 8 zum Färben oder Bedrucken eines hydroxy-, mercapto-, amino- oder carbonamidgruppenhaltigen oder eine Kombination dieser Gruppen enthaltenden Materials.

14. Verbindung der Formel (4), 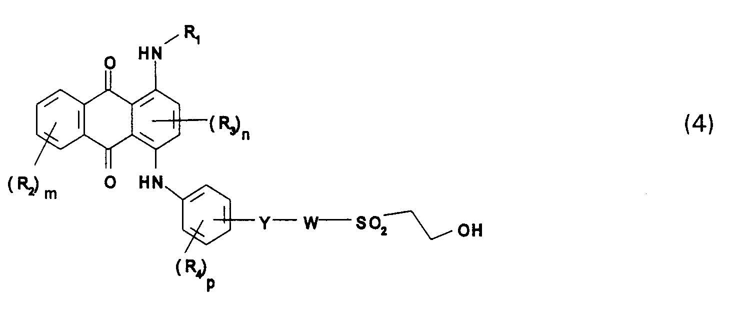 worin R¹, R², R³, R⁴, W, Y, m, n und p die in mindestens einem der Ansprüche 1 bis 8 genannten Bedeutungen haben.

15. Verfahren zur Herstellung einer Verbindung der Formel (4) gemäß Anspruch 14, dadurch gekennzeichnet, daß man eine Verbindung der Formel (2) 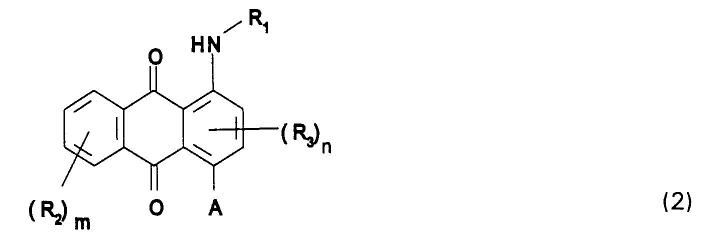 worin A für Fluor, Chlor, Brom, Jod, Sulfo oder Nitro steht und die Reste R¹, R², R³ und m und n die in Anspruch 1 genannten Bedeutungen haben, mit einer Verbindung der Formel (3a) 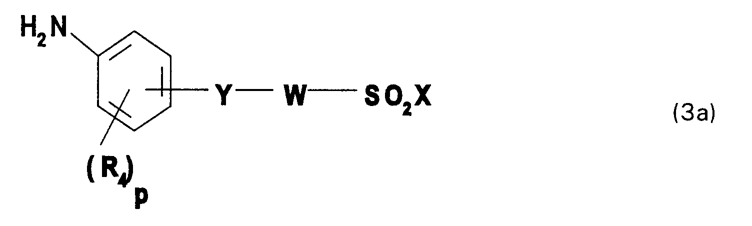 wobei R⁴, Y, W und p die in Formel (1) genannten Bedeutungen haben und X β-Hydroxyethyl bedeutet, in Gegenwart einer Kupferverbindung, vorzugsweise CuCl, CuBr, CuJ oder CuCN, umsetzt.

16. Verwendung einer Verbindung der Formel (4) gemäß Anspruch 14 zur Herstellung eines faserreaktiven Anthrachinonfarbstoffes, indem man die Verbindung der Formel (4) mit Schwefelsäure, Oleum, einer Halogensulfonsäure oder Phosphorsäure umsetzt.

## Claims

1. An anthraquinone compound of the formula (1) 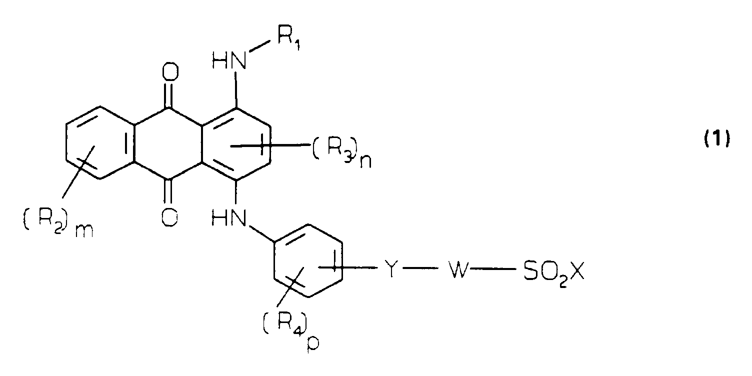 in which
R¹ is hydrogen, C₁-C₆-alkyl-carbonyl, C₆-aryl-carbonyl, C₁-C₄-alkylphenylcarbonyl, C₁-C₆-alkyl, C₃-C₆-cycloalkyl or phenyl, where C₁-C₆-alkyl, C₃-C₆-cycloalkyl and phenyl can be substituted by one or more radicals from the group consisting of hydroxyl, sulfo, carboxyl, C₁-C₄-alkyl, C₁-C₄-alkoxy, halogen, cyano, amino and nitro;
R² is sulfo or carboxyl;
m is a number from 0 to 2;
R³ is sulfo, carboxyl or halogen;
n is the number 0 or 1;
R⁴ is sulfo, carboxyl, C₁-C₄-alkyl or C₁-C₄-alkoxy;
p is a number from 0 to 2;
W is a C₁-C₆-alkylene group;
X is vinyl or -CH₂CH₂-L, in which L is a group which can be split off under alkaline conditions; and
Y is a bridge member of the formula -O- or -NH-
with the proviso that W is a C₃-C₆-alkylene group if X is vinyl and at the same time Y is -NH-.

2. An anthraquinone compound as claimed in claim 1, in which
R¹ is hydrogen, C₁-C₄-alkyl, C₅-C₆-cycloalkyl, acetyl, benzoyl, phenyl or methylphenyl-carbonyl, or C₁-C₄-alkyl, C₅-C₆-cycloalkyl or phenyl which are substituted by 1 to 3 radicals from the group consisting of hydroxyl, sulfo, carboxyl, methyl, ethyl, methoxy, ethoxy, fluorine, chlorine, bromine, cyano or nitro.

3. An anthraquinone compound as claimed in claim 1 or 2, in which R³ is chlorine, bromine or a sulfo group in the ortho-position relative to the NH-R¹ group.

4. An anthraquinone compound as claimed in at least one of claims 1 to 3, in which W is C₂-C₃-alkylene, preferably 1,2-ethylene or 1,3-propylene.

5. An anthraquinone compound as claimed in at least one of claims 1 to 4, in which L is chlorine, bromine, -OSO₃M, -SSO₃M or -OPO₃M₂, in which M is hydrogen or an alkali metal.

6. An anthraquinone compound as claimed in at least one of claims 1 to 5, in which
m is the number 0;
n is the number 1 and
p is the number 0 or 1.

7. An anthraquinone compound as claimed in at least one of claims 1 to 6, in which the radical -Y-W-SO₂X is in the meta- or para-position relative to the NH group of the phenyl ring.

8. An anthraquinone compound as claimed in claim 1, which has the formula (1a) or (1b) 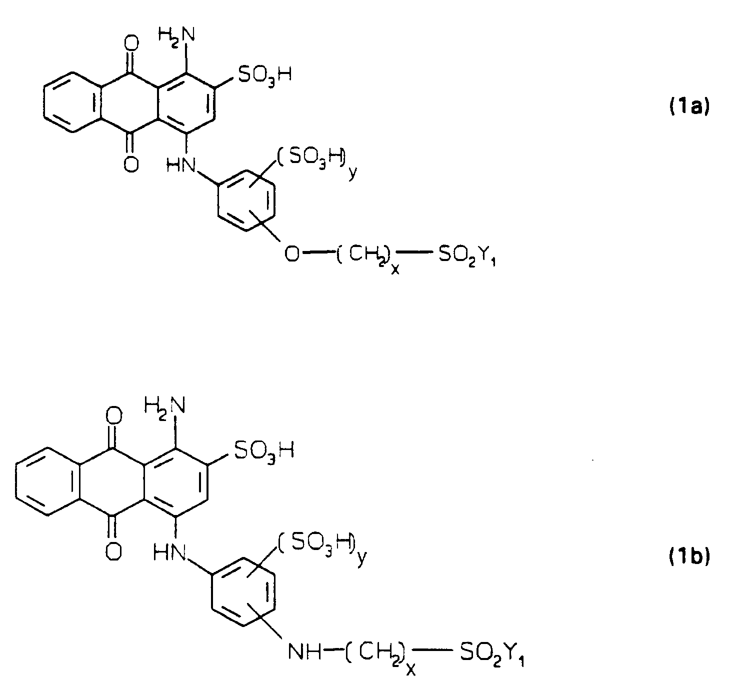 in which
x is the number 2 or 3;
y is 0, 1 or 2, in particular 0 or 1; and
Y¹ is β-sulfatoethyl, β-chloroethyl or vinyl with the proviso for the compound of the formula (1b) that if Y¹ is vinyl x is the number 3.

9. A process for the preparation of an anthraquinone compound of the formula (1) as claimed in at least one of claims 1 to 8, which comprises reacting a compound of the formula (2) 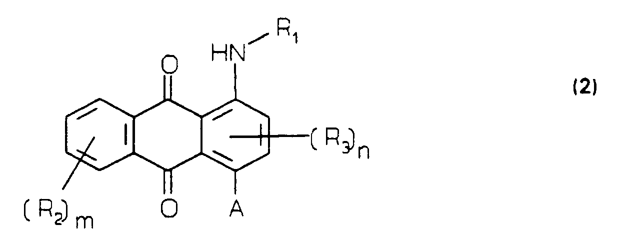 in which A is fluorine, chlorine, bromine, iodine, sulfo or nitro, but particularly preferably bromine, and the radicals R¹, R², R³ and m and n have one of the abovementioned meanings, with a compound of the formula (3) 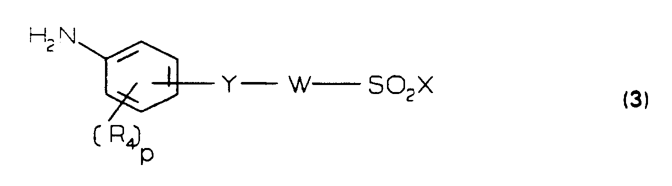 in which R⁴, Y, W and p have one of the abovementioned meanings and X has one of the abovementioned meanings in the presence of a copper compound.

10. A process for the preparation of an anthraquinone compound of the formula (1) as claimed in at least one of claims 1 to 8, which comprises reacting a compound of the formula (2) 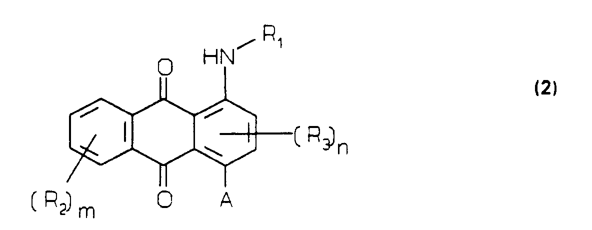 in which A is fluorine, chlorine, bromine, iodine, sulfo or nitro and the radicals R¹, R², R³ and n and m have the meanings given in formula (1), with a compound of the formula (3a) 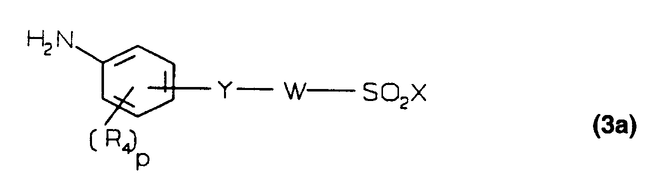 in which R⁴, Y, W and p have the meanings given in formula (1) and X is β-hydroxyethyl, in the presence of a copper compound to give a compound of the formula (4) 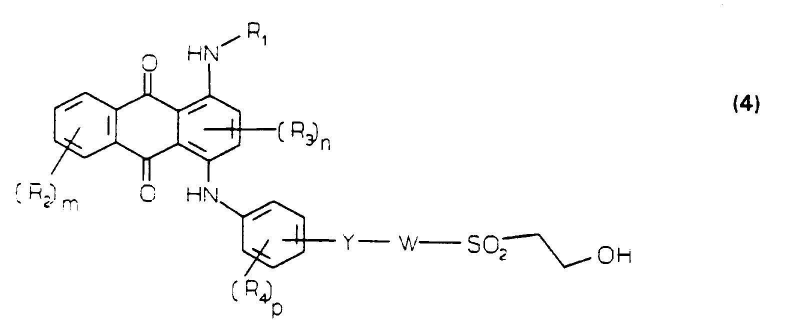 and in a subsequent reaction step converting this into an anthraquinone compound of the formula (1).

11. The process as claimed in claim 9 or 10, wherein the copper compound is a Cu(I) compound, preferably CuCl, CuBr, CuI or CuCN.

12. The process as claimed in claim 10 or 11 for the preparation of an anthraquinone compound of the formula (1) in which p is the number 1 and L is -OSO₃M, wherein a compound of the formula (3a) which is free from sulfo groups is employed and is esterified and simultaneously sulfonated with sulfuric acid comprising 15 to 60% by weight of SO₃ at temperatures from 20 to 100°C, preferably at 40 to 80°C

13. The use of an anthraquinone compound of the formula (1) as claimed in at least one of claims 1 to 8 for dyeing or printing a material containing hydroxyl, mercapto, amino or carboxamide groups or containing a combination of these groups.

14. A compound of the formula (4) 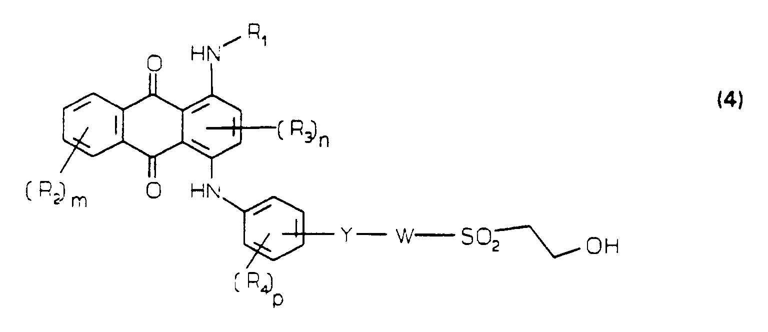 in which R¹, R², R³, R⁴, W, Y, m, n and p have the meanings given in at least one of claims 1 to 8.

15. A process for the preparation of a compound of the formula (4) as claimed in claim 14, which comprises reacting a compound of the formula (2) 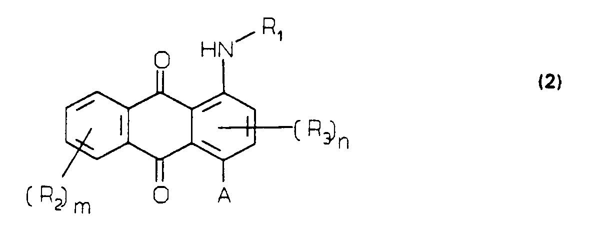 in which A is fluorine, chlorine, bromine, iodine, sulfo or nitro and the radicals R¹, R², R³ and m and n have the meanings given in claim 1, with a compound of the formula (3a) 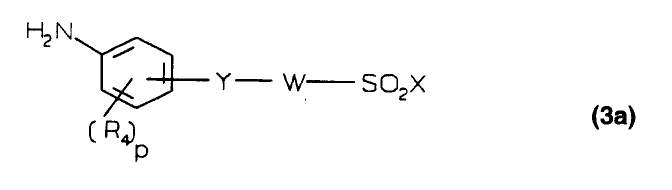 in which R⁴, Y, W and p have the meanings given in formula (1) and X is β-hydroxyethyl, in the presence of a copper compound, preferably CuCl, CuBr, CuI or CuCN.

16. The use of a compound of the formula (4) as claimed in claim 14 for the preparation of a fiber-reactive anthraquinone dyestuff by reacting the compound of the formula (4) with sulfuric acid, oleum, a halosulfonic acid or phosphoric acid.

## Revendications

1. Composé anthraquinone de formule (1) 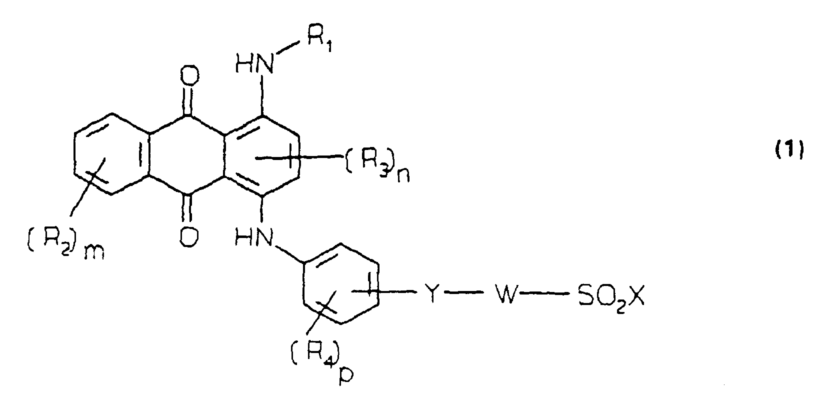 dans laquelle
R¹ représente un hydrogène, un C₁-C₆-alkylcarbonyle, un C₆-arylcarbonyle, un C₁-C₄-alkylphénylcarbonyle, un alkyle en C₁-C₆, un cycloalkyle en C₃-C₆ ou un phényle, où l'alkyle en C₁-C₆, le cycloalkyle en C₃-C₆, et le phényle peuvent être substitués par un ou plusieurs radicaux parmi le groupe constitué d'un hydroxy, d'un sulfo, d'un carboxy, d'un alkyle en C₁-C₄, d'un alcoxy en C₁-C₄, d'un halogène, d'un cyano, d'un amino et d'un nitro ;
R² représente un sulfo ou un carboxy ;
m représente un nombre de 0 à 2 ;
R³ représente un sulfo, un carboxy ou un halogène ;
n représente le nombre 0 ou 1 ;
R⁴ représente un sulfo, un carboxy, un alkyle en C₁-C₄ ou un alcoxy en C₁-C₄ ;
p représente un nombre de 0 à 2 ;
W représente un groupe alkylène en C₁-C₆ ;
X représente un vinyle ou -CH₂-CH₂-L, où L est un groupe pouvant être éliminé dans des conditions alcalines ; et
Y représente un élément de pontage de formule -O- ou
à condition que W soit un groupe alkylène en C₃-C₆ si X désigne un vinyle et Y désigne simultanément -NH-.

2. Composé anthraquinone selon la revendication 1, caractérisé en ce que
R¹ représente un hydrogène, un alkyle en C₁-C₄, un cycloalkyle en C₅-C₆, un acétyle, un benzoyle, un phényle ou un méthylphénylcarbonyle, ou un alkyle en C₁-C₄, un cycloalkyle en C₅-C₆ et un phényle qui sont substitués par 1 à 3 radicaux parmi le groupe constitué d'un hydroxy, d'un sulfo, d'un carboxy, d'un méthyle, d'un éthyle, d'un méthoxy, d'un éthoxy, d'un fluor, d'un chlore, d'un brome, d'un cyano ou d'un nitro.

3. Composé anthraquinone selon la revendication 1 ou 2, caractérisé en ce que R³ est un chlore, un brome ou un groupe sulfo en position ortho par rapport au groupe NH-R¹.

4. Composé anthraquinone selon au moins l'une des revendications 1 à 3, caractérisé en ce que W est un alkylène en C₂-C₃, de préférence un 1,2-éthylène ou un 1,3-propylène.

5. Composé anthraquinone selon au moins l'une des revendications 1 à 4, caractérisé en ce que L est un chlore, un brome, -OSO₃M, -SSO₃M ou -OPO₃M₂, où M représente un hydrogène ou un métal alcalin.

6. Composé anthraquinone selon au moins l'une des revendications 1 à 5, caractérisé en ce que
m est le nombre 0 ;
n est le nombre 1 et
p est le nombre 0 ou 1.

7. Composé anthraquinone selon au moins l'une des revendications 1 à 6, caractérisé en ce que le radical -Y-W-SO₂X est en position méta ou para par rapport au groupe NH du noyau phénylique.

8. Composé anthraquinone selon la revendication 1, caractérisé par la formule (1a) ou (1b) 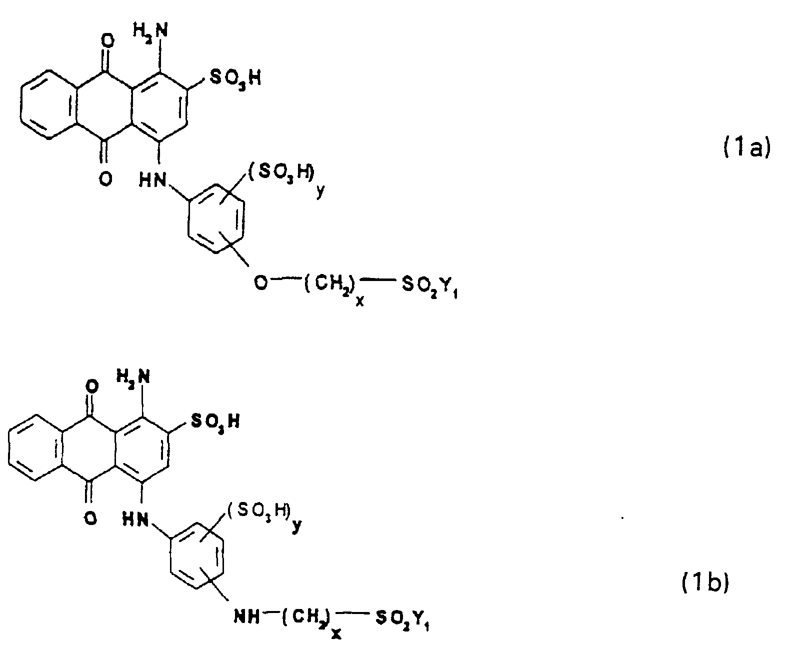 dans lesquelles
x désigne le nombre 2 ou 3 ;
y vaut 0, 1 ou 2, en particulier 0 ou 1 ; et
Y¹ désigne un β-sulfatoéthyle, un β-chloroéthyle ou un vinyle, à condition, pour le composé de formule (1b), qu'au cas où Y¹ représente un vinyle, x soit le nombre 3.

9. Procédé de préparation d'un composé anthraquinone de formule (1) selon au moins l'une des revendications 1 à 8, caractérisé en ce que l'on fait réagir un composé de formule (2) 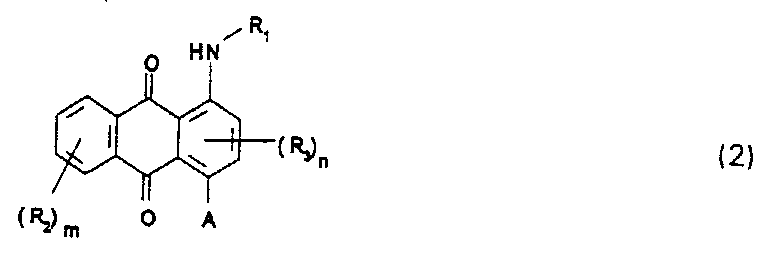 dans laquelle A désigne un fluor, un chlore, un brome, un iode, un sulfo ou un nitro, mais particulièrement préférablement un brome, et les radicaux R¹, R² et R³ ainsi que m et n ont l'une des significations susmentionnées,
avec un composé de formule (3), 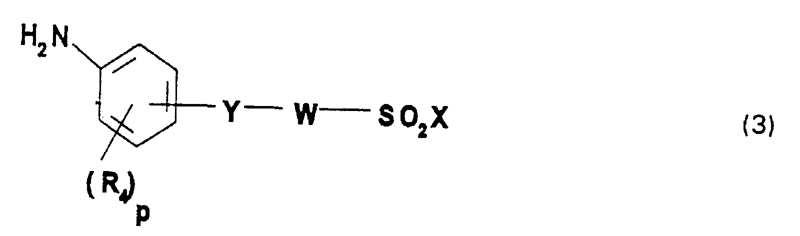 dans laquelle R⁴, Y, W et p ont l'une des significations susmentionnées et X a l'une des significations susmentionnées, en présence d'un composé du cuivre.

10. Procédé de préparation d'un composé anthraquinone de formule (1) selon au moins l'une des revendications 1 à 8, caractérisé en ce que l'on fait réagir un composé de formule (2) 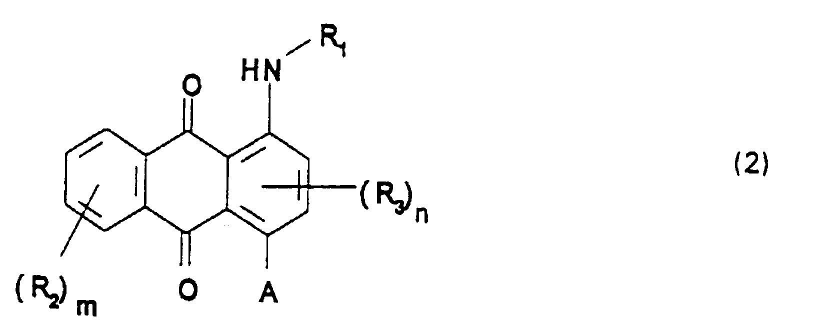 dans laquelle A désigne un fluor, un chlore, un brome, un iode, un sulfo ou un nitro, et les radicaux R¹, R², R³ et n et m ont les significations mentionnées dans la formule (1), avec un composé de formule (3a) 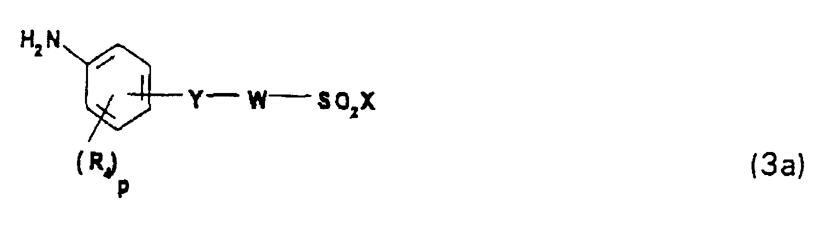 dans laquelle R⁴, Y, W et p ont les significations mentionnées dans la formule (1) et X représente un β-hydroxyéthyle, en présence d'un composé du cuivre, pour donner un composé de formule (4) 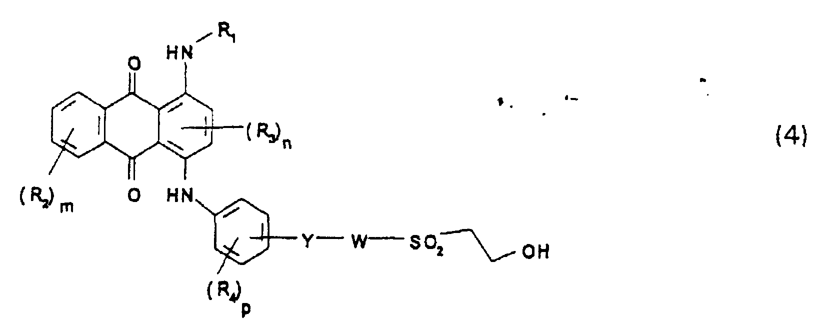 et on le transforme en un composé anthraquinone de formule (1) dans une étape de réaction ultérieure.

11. Procédé selon la revendication 9 ou 10, caractérisé en ce que le composé du cuivre est un composé de Cu(I), de préférence le CuCl, le CuBr, le CuI ou le CuCN.

12. Procédé selon la revendication 10 ou 11 pour la préparation d'un composé anthraquinone de formule (1), dans laquelle p représente le nombre 1 et L représente -OSO₃M, caractérisé en ce que l'on utilise un composé de formule (3a) qui est dépourvu de groupes sulfo, et on procède à son estérification et sa sulfuration simultanée avec de l'acide sulfurique contenant de 15 à 60% en poids de SO₃, à des températures de 20 à 100°C, de préférence de 40 à 80°C.

13. Utilisation d'un composé anthraquinone de formule (1) selon au moins l'une des revendications 1 à 8, pour la teinture ou l'impression d'une matière renfermant des groupes hydroxy, mercapto, amino ou carboxamide ou renfermant une combinaison de ces groupes.

14. Composé de formule (4) 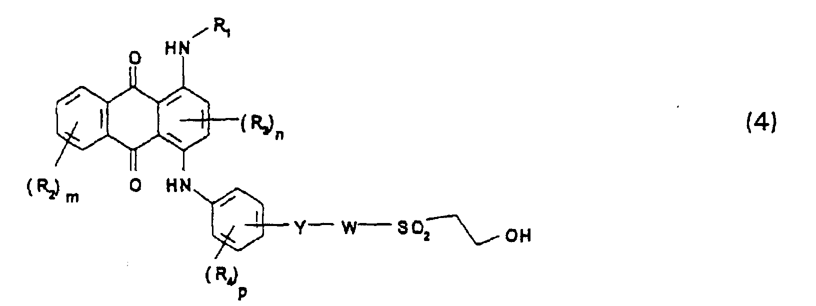 dans laquelle R¹, R² R³, R⁴, W, Y, m, n, et p ont les significations mentionnées dans au moins l'une des revendications 1 à 8.

15. Procédé de préparation d'un composé de formule (4) selon la revendication 14, caractérisé en ce que l'on fait réagir un composé de formule (2) 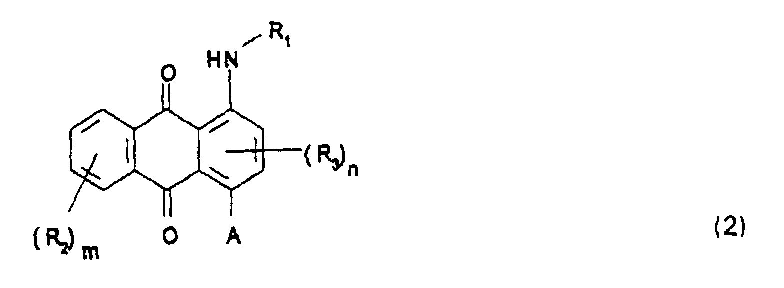 dans laquelle A désigne un fluor, un chlore, un brome, un iode, un sulfo ou un nitro, et les radicaux R¹, R², R³ et m et n ont les significations mentionnées à la revendication 1,
avec un composé de formule (3a) 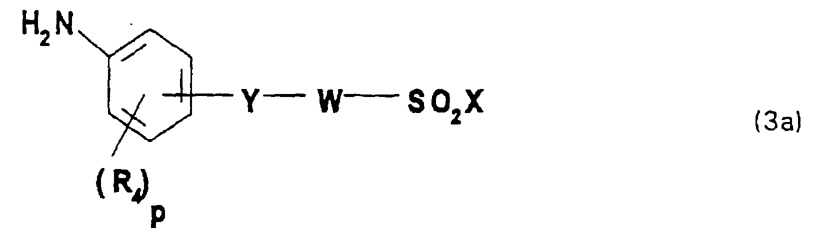 dans laquelle R⁴, Y, W et p ont les significations mentionnées dans la formule (1) et X représente un β-hydroxyéthyle, en présence d'un composé du cuivre, de préférence le CuCl, le CuBr, le CuI ou le CuCN.

16. Utilisation d'un composé de formule (4) selon la revendication 14 pour la préparation d'un colorant anthraquinone réactif, en faisant réagir le composé de formule (4) avec de l'acide sulfurique, de l'oléum, un acide halogénosulfonique ou de l'acide phosphorique.
